# FASCICULE DE BREVET EUROPEEN

(11) **EP 1 279 844 B1**
(45) Date de publication et mention de la délivrance du brevet: **17.10.2007**
(21) Numéro de dépôt: 02291906.2
(22) Date de dépôt: 26.07.2002
(51) Int. Cl.: F16C 19/52, F16C 19/18

(54) **Dispositif de guidage en rotation d'une charge**
Drehbare Führungsvorrichtung für eine Last
Rotary guiding device for a load

(30) Priorité: 27.07.2001 FR 0110125
(43) Date de publication de la demande: 29.01.2003
(73) Titulaire: Thales, 75008 Paris (FR)
(72) Inventeur: Berland, Gilles, Thales Intellectual Property, 94117 Arcueil Cedex (FR); Collard, Eric, Thales Intellectual Property, 94117 Arcueil Cedex (FR)
(74) Mandataire: Chaverneff, Vladimir

(56) Documents cités:
- US-A- 2 037 982
- US-A- 3 359 047
- US-A- 4 635 330
- US-A- 4 895 462

## Description

La présente invention concerne un dispositif de guidage en rotation d'une charge et s'applique notamment au guidage d'une charge en porte-à-faux. Elle s'applique de façon générale aux charges en rotation de tout équipement soumis à de fortes variations thermiques et pouvant nécessiter des raideurs élevées.

Dans le cadre par exemple de la conception d'équipements aéroportés, il s'avère nécessaire de réaliser des mécanismes d'encombrement et de masse de plus en plus réduits, capables de supporter des environnements vibratoires sévères, des chocs et des variations de température sans dégradation ni modification des performances.

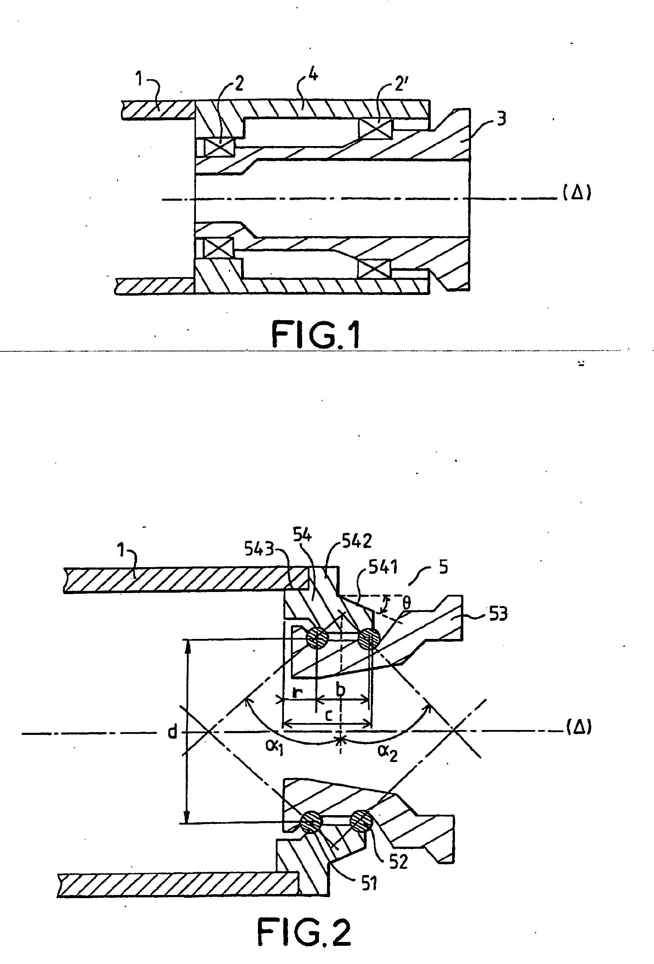

La figure 1 présente une conception classique de dispositif de guidage en rotation d'une charge en porte-à-faux (non représentée), montée sur une structure porteuse 1. Le dispositif de guidage selon l'art antérieur comprend deux paires de roulements à billes 2, 2' précontraints, supportant une partie tournante 3 autour d'un axe de rotation (Δ), ou fusée, sur laquelle est fixée la charge et fixées dans un boîtier 4. Les contraintes thermiques auxquelles sont soumis par exemple les équipements aéroportés (environ -55° à +85°) imposent l'utilisation du titane comme matériau de réalisation pour la fusée et le boîtier. En effet, la différence de coefficient de dilatation entre les roulements en acier et leur environnement contraint les pièces et augmente considérablement le couple de frottement des paliers. Ainsi, à froid, un boîtier en aluminium compresserait trop les bagues extérieures des roulements. A chaud, une fusée en aluminium compresserait trop les bagues intérieures du roulement tandis que les jeux des bagues extérieures se verraient libérer par la dilatation du boîtier. Le titane, qui présente un coefficient de dilatation proche de celui de l'acier, permet de réduire ces effets. Par ailleurs, il présente une densité inférieure à celle de l'acier permettant de réduire la masse de l'équipement. Enfin, la contrainte de rigidité imposée aux équipements aéroportés conforte le choix du titane, en effet, la rigidité de l'axe tournant est également donnée par la rigidité de la fusée.

Cependant, cette conception classique présente plusieurs inconvénients. Notamment, le coût du titane, de son moulage et de son usinage pour former quatre portées de roulement est élevé. D'autre part, le montage des roulements est incertain et manque de répétabilité en terme de couple et de faux-rond. Enfin, l'encombrement et la masse du dispositif de guidage restent conséquents malgré l'utilisation du titane, du fait de l'écart entre les paliers tournants.

Le document US-A-4635330 montre aussi un dispositif de guidage en rotation.

La présente invention permet de remédier aux inconvénients précités en proposant une conception nouvelle de dispositif de guidage en rotation, qui utilise un palier compact à deux rangées de billes dont la forme spécifique permet d'absorber les variations thermiques sans faire varier le couple d'entretien du palier ni la charge des billes.

Plus précisément, l'invention propose un dispositif de guidage en rotation d'une charge par rapport à une structure porteuse, caractérisé en ce qu'il comprend un palier à deux rangées de billes, logées entre une bague intérieure supportant la charge et une bague extérieure fixée directement sur la structure porteuse, et en ce que la partie avant de la bague extérieure présente une forme conique qui tend à compenser, lors des variations de température, la compression exercée par la structure porteuse sur la bague extérieure.

Le dispositif de guidage en rotation selon l'invention ne nécessite plus l'utilisation du titane (le palier est par exemple en acier) pour supporter les variations de température, son encombrement et sa masse sont réduits du fait de l'utilisation d'un palier à deux rangées de billes, de structure beaucoup plus compacte. Avantageusement, l'angle de contact des rangées de billes est élevé, garantissant en outre notamment dans le cas d'une charge en porte-à-faux une grande rigidité de basculement du dispositif.

D'autres avantages et caractéristiques apparaîtront plus clairement à la lecture de la description qui suit, illustrée par les figures annexées qui représentent :
- la figure 1, un dispositif de guidage en rotation d'une charge en porte-à-faux selon l'art antérieur (déjà décrite) ;
- la figure 2, un exemple de réalisation d'un dispositif de guidage en rotation d'une charge selon l'invention.

La figure 2 présente un exemple de réalisation du dispositif de guidage selon l'invention. Dans cet exemple, la structure porteuse (1) supporte une charge en porte-à-faux mais l'invention peut s'appliquer également par exemple à une charge axiale.

Il comprend un palier 5 à deux rangées de billes 51 et 52 respectivement avant et arrière, les billes étant logées entre une bague intérieure 53 supportant la charge et une bague extérieure 54 fixée directement sur la structure porteuse 1. Les rangées de billes 51 et 52 présentent un diamètre d moyen sensiblement identique.

Dans l'exemple de la figure 2, la bague intérieure 53, par exemple en acier, forme la partie tournante sur laquelle est fixée la charge, et assure ainsi la fonction de la fusée (3) du dispositif de l'art antérieur (figure 1). La bague extérieure, également en acier, commune pour les deux rangées de billes 51, 52, est fixée directement sur la structure porteuse 1, par exemple en aluminium, assurant ainsi la fonction du boîtier (4) du dispositif de l'art antérieur. Le palier est ainsi intégré à la structure, ce qui donne au dispositif selon l'invention une bien plus grande compacité, et l'utilisation du titane n'est plus nécessaire.

Dans l'exemple de la figure 2, la bague extérieure 54 du palier est fixée par une collerette 542 à la structure porteuse 1 et centrée sur ladite structure par un centrage circulaire court 543. La bague intérieure (53), également commune pour les deux rangées de billes, est par exemple prévue en deux parties (non représentées sur la figure 2), afin de pouvoir monter les billes et précharger le roulement.

Selon l'invention, la forme de la partie avant 541 de la bague extérieure 54 est conique, permettant d'équilibrer, lors des baisses de température, les efforts portés sur les rangées de billes avant (52) et arrière (51) dus à la compression exercée par la structure porteuse 1. Dans la suite de la description, on qualifie de « avant » les éléments situés vers la charge et de « arrière » les éléments situés vers la structure porteuse. Cette forme originale de la bague extérieure du palier selon l'invention est optimisée pour compenser, lors des baisses de température, la compression qu'exerce la structure en aluminium (coefficient de dilatation sensiblement égal à 23.10⁻⁶) sur la bague extérieure en acier (coefficient de dilatation sensiblement égal à 12.10⁻⁶). Lors de la compression en effet, la bague extérieure se déforme en cône de telle sorte que le rapprochement des pistes arrières en contact avec les billes 51 de la rangée arrière est compensé par l'écartement des pistes avant en contact avec les billes 52 de la rangée avant. Ainsi, l'écrasement des contacts billes/pistes dû à la précharge du palier reste constant à toute température et de ce fait le couple d'entretien du palier reste constant.

Ainsi, la forme conique de la partie avant de la bague extérieure tend à compenser, lors des variations de température, la compression exercée par la structure sur la bague extérieure, cette compression résultant des différences dans les coefficients de dilatation des matériaux dont sont constitués la structure porteuse et le palier.

La déposante a montré que par exemple dans le cas de l'application à des équipements pour lesquels les gammes de températures sont importantes (par exemple, -55° à +85° environ), le demi-angle au sommet θ du cône formant la partie avant 541 de la bague extérieure 54 est avantageusement compris entre 20° et 30°. Dans l'exemple de la figure 2, il est proche de 25°. Par ailleurs, la déposante a montré qu'un effet de compensation particulièrement intéressant est obtenu en optimisant le paramètre r défini comme la distance mesurée entre l'extrémité arrière du centrage 543 de la bague extérieure et le plan contenant les centres des billes 51 de la rangée arrière du palier. En effet, il est important que les billes de la rangée arrière se trouvent en porte-à-faux par rapport à la force d'action exercée par la structure sur la bague extérieure. Cette distance doit être déterminée en fonction d'un compromis entre une forte compensation en température (r grand) et la raideur du palier ; en effet si la distance r est trop grande, la raideur risque d'être supportée par la structure mécanique.

Dans un premier exemple de réalisation, la déposante a montré qu'un bon compromis peut être trouvé en choisissant la distance r sensiblement comprise entre 2% et 4% du diamètre moyen d de la rangée des billes. Les paramètres r et θ permettent ainsi d'optimiser l'effet de compensation en fonction des variations de température et sont choisis en fonction de l'amplitude de ces variations.

Le dispositif selon l'invention présente en outre l'avantage, grâce à son palier intégré à deux rangées de billes, d'avoir un encombrement et une masse considérablement réduits par rapport au dispositif de l'art antérieur, du type de celui décrit figure 1. En outre, le titane peut être supprimé.

Ce dispositif n'en présente pas moins une très bonne rigidité, ce qui est important notamment dans le cas de l'application au guidage d'une charge en porte-à-faux. En effet, le choix notamment des angles de contact α₁ des billes 51 de la rangée arrière et α₂ des billes 52 de la rangée avant permet de donner au dispositif de guidage une très bonne rigidité de basculement. Pour cela, les angles de contact sont choisis supérieurs à 35° environ. Selon un exemple de réalisation, les angles de contact sont sensiblement identiques, sensiblement compris entre 40° et 50°.

La rigidité peut être optimisée également en jouant sur d'autres paramètres. Ainsi, la distance b entre les deux rangées de billes 51 et 52 est choisie pour obtenir un bon compromis entre l'exigence de raideur (b grand) et la nécessité de diminuer l'encombrement de la bague extérieure ainsi que sa masse. La déposante a montré qu'un bon compromis est trouvé en choisissant la distance b comprise entre 5% et 10% du diamètre moyen d des rangées. La largeur c de la bague extérieure est également un paramètre sur lequel on peut jouer pour optimiser la raideur en flexion de la poutre. La déposante a montré qu'une valeur de la largeur c sensiblement comprise entre 8% et 9% du diamètre moyen d des rangées de billes contribue à donner des résultats satisfaisants.

Ainsi, l'exemple de réalisation décrit sur la figure 2 a permis d'obtenir une rigidité supérieure à 20% par rapport au dispositif classique avec un angle de contact de l'ordre de 45° pour les billes des deux rangées, une distance b entre les deux rangées de billes 51 et 52 comprise entre 6,5% et 7,5% du diamètre moyen d et une largeur c de la bague extérieure 54 sensiblement comprise entre 8% et 8,5% du diamètre moyen d.

L'influence de la bague intérieure 53 sur les propriétés de réponse en température ou de rigidité est beaucoup moins critique. Avantageusement, la bague intérieure est choisie très courte afin de limiter l'encombrement.

Dans un second exemple de réalisation, la déposante a montré que de bons effets de compensation de la compression due aux variations de température ainsi qu'une très bonne rigidité sont obtenus avec les paramètres suivants : le demi-angle au sommet θ du cône formant la partie avant de la bague extérieure entre 20° et 30°, la distance r entre 4% et 8% du diamètre moyen d, les angles de contact α₁ et α₂ sensiblement identiques, supérieurs à 35°, une distance b comprise entre 5% et 10% du diamètre moyen d, une largeur c comprise entre 12% et 14% du diamètre moyen d. Un très bon compromis est obtenu en choisissant la distance r entre 5% et 7% du diamètre moyen d et la distance b entre 6% et 7% du diamètre moyen d.

Ainsi, le dispositif de guidage selon l'invention présente une longueur nettement plus faible que le dispositif selon l'art antérieur, et malgré la densité supérieure de l'acier par rapport au titane, la masse de l'ensemble est plus faible. Comme cela a été expliqué précédemment, la rigidité peut être améliorée et la charge est mieux répartie sur les billes ; la tenue mécanique est donc supérieure. La forme originale de la bague extérieure du palier permet d'assurer que l'écrasement des billes reste constant quelle que soit la température ; le couple d'entretien ne varie donc pas. Le dispositif de guidage en rotation selon l'invention présente en outre l'avantage d'être isostatique, d'assurer une meilleure fiabilité, et d'être d'une grande simplicité de mise en oeuvre.

## Revendications

1. Dispositif de guidage en rotation d'une charge par rapport à une structure porteuse (1), **caractérisé en ce qu**'il comprend un palier (5) à deux rangées de billes (51, 52), logées entre une bague intérieure (53) supportant la charge et une bague extérieure (54) fixée directement sur la structure porteuse (1), et en ce que la partie avant (541) de la bague extérieure (54) présente une forme conique qui tend à compenser, lors des variations de température, la compression exercée par la structure porteuse (1) sur la bague extérieure (54).

2. Dispositif selon la revendication 1, **caractérisé en ce que** la bague extérieure (54) du palier (5) est fixée par une collerette (542) à la structure porteuse (1) et centrée sur ladite structure par un centrage circulaire court (543).

3. Dispositif selon l'une des revendications 1 ou 2, **caractérisé en ce que** le demi-angle au sommet (θ) du cône formant la partie avant (541) de la bague extérieure (54) est sensiblement compris entre 20° et 30°.

4. Dispositif selon l'une des revendications précédentes, **caractérisé en ce que** les angles de contact (α₁) des billes (51) de la rangée arrière et (α₂) des billes (52) de la rangée avant sont supérieurs à 35°.

5. Dispositif selon la revendication 4, **caractérisé en ce qu**e lesdits angles de contact sont sensiblement identiques, sensiblement compris entre 40° et 50°.

6. Dispositif selon l'une des revendications 2 à 5, **caractérisé en ce que** la distance (r) mesurée entre l'extrémité arrière du centrage (543) de la bague extérieure et le plan contenant les centres des billes (51) de la rangée arrière du palier est sensiblement comprise entre 2% et 4% du diamètre moyen (d) de ladite rangée.

7. Dispositif selon la revendication 6, **caractérisé en ce que** la distance (b) entre les deux rangées de billes (51, 52) est sensiblement comprise entre 5% et 10% du diamètre moyen (d) desdites rangées.

8. Dispositif selon l'une des revendications 6 ou 7, **caractérisé en ce que** la largeur (c) de la bague extérieure est sensiblement comprise entre 8% et 9% du diamètre moyen (d) des rangées de billes.

9. Dispositif selon l'une des revendications 2 à 5, **caractérisé en ce que** la distance (r) mesurée entre l'extrémité arrière du centrage (543) de la bague extérieure et le plan contenant les centres des billes (51) de la rangée arrière du palier est sensiblement comprise entre 4% et 8% du diamètre moyen (d) de ladite rangée.

10. Dispositif selon la revendication 9, **caractérisé en ce que** la distance (b) entre les deux rangées de billes (51, 52) est sensiblement comprise entre 5% et 10% du diamètre moyen (d) desdites rangées.

11. Dispositif selon l'une des revendications 6 ou 7, **caractérisé en ce que** la largeur (c) de la bague extérieure est sensiblement comprise entre 12% et 14% du diamètre moyen (d) des rangées de billes.

12. Dispositif selon la revendication 2, **caractérisé en ce que** le demi-angle au sommet (θ) du cône formant la partie avant (541) de la bague extérieure (54) est sensiblement compris entre 20° et 25°, **en ce que** la distance (r) mesurée entre l'extrémité arrière du centrage (543) de la bague extérieure et le plan contenant les centres des billes (51) de la rangée arrière du palier est sensiblement comprise entre 2,5% et 3,5% du diamètre moyen (d) de ladite rangée, **en ce que** les angles de contact (α₁) des billes (51) de la rangée arrière et (α₂) des billes (52) de la rangée avant sont sensiblement identiques, sensiblement égaux à 45°, **en ce que** la distance (b) entre les deux rangées de billes (51, 52) est comprise entre 6,5% et 7,5% du diamètre moyen (d) desdites rangées et **en ce que** la largeur (c) de la bague extérieure (54) est sensiblement comprise entre 8% et 8,5% du diamètre moyen (d) des rangées de billes.

13. Dispositif selon la revendication 2, **caractérisé en ce que** le demi-angle au sommet (θ) du cône formant la partie avant (541) de la bague extérieure (54) est sensiblement compris entre 20° et 25°, **en ce que** la distance (r) mesurée entre l'extrémité arrière du centrage (543) de la bague extérieure et le plan contenant les centres des billes (51) de la rangée arrière du palier est sensiblement comprise entre 5% et 7% du diamètre moyen (d) de ladite rangée, **en ce que** les angles de contact (α₁) des billes (51) de la rangée arrière et (α₂) des billes (52) de la rangée avant sont sensiblement identiques, sensiblement égaux à 45°, **en ce que** la distance (b) entre les deux rangées de billes (51, 52) est comprise entre 6% et 7% du diamètre moyen (d) desdites rangées et **en ce que** la largeur (c) de la bague extérieure (54) est sensiblement comprise entre 12% et 14% du diamètre moyen (d) des rangées de billes.

14. Dispositif selon l'une des revendications précédentes, **caractérisé en ce que** la structure porteuse (1) est en aluminium et les bagues intérieure (53) et extérieure (54) du palier (5) sont en acier.

## Claims

1. Device for rotationally guiding a load relative to a carrying structure (1), **characterized in that** it comprises a bearing (5) with two rows of balls (51, 52), housed between an inner race (53) supporting the load and an outer race (54) attached directly to the carrying structure (1), and **in that** the front portion (541) of the outer race (54) has a conical shape which, during temperature variations, tends to compensate for the compression exerted by the carrying structure (1) on the outer race (54).

2. Device according to Claim 1, **characterized in that** the outer race (54) of the bearing (5) is attached by a collar (542) to the carrying structure (1) and centred on the said structure by a short circular centring element (543).

3. Device according to one of Claims 1 or 2, **characterized in that** the half-angle at the vertex (θ) of the cone forming the front portion (541) of the outer race (54) is substantially between 20° and 30°.

4. Device according to one of the preceding claims, **characterized in that** the angle of contact (α₁) of the balls (51) of the rear row and the angle of contact (α₂) of the balls (52) of the front row are greater than 35°.

5. Device according to Claim 4, **characterized in that** the said angles of contact are substantially identical, substantially lying between 40° and 50°.

6. Device according to Claims 2 to 5, **characterized in that** the distance (r) measured between the rear end of the centring element (543) of the outer race and the plane containing the centres of the balls (51) of the rear row of the bearing is substantially between 2% and 4% of the average diameter (d) of the said row.

7. Device according to Claim 6, **characterized in that** the distance (b) between the two rows of balls (51, 52) lies substantially between 5% and 10% of the average diameter (d) of the said rows.

8. Device according to one of Claims 6 or 7, **characterized in that** the width (c) of the outer race lies substantially between 8% and 9% of the average diameter (d) of the rows of balls.

9. Device according to one of Claims 2 to 5, **characterized in that** the distance (r) measured between the rear end of the centring element (543) of the outer race and the plane containing the centres of the balls (51) of the rear row of the bearing is substantially between 4% and 8% of the average diameter (d) of the said row.

10. Device according to Claim 9, **characterized in that** the distance (b) between the two rows of balls (51, 52) is substantially between 5% and 10% of the average diameter (d) of the said rows.

11. Device according to one of Claims 6 or 7, **characterized in that** the width (c) of the outer race is substantially between 12% and 14% of the average diameter (d) of the rows of balls.

12. Device according to Claim 2, **characterized in that** the half-angle at the vertex (θ) of the cone forming the front portion (541) of the outer race (54) is substantially between 20° and 25°, and **in that** the distance (r) measured between the rear end of the centring element (543) of the outer race and the plane containing the centres of the balls (51) of the rear row of the bearing is substantially between 2.5% and 3.5% of the average diameter (d) of the said row, **in that** the angle of contact (α₁) of the balls (51) of the rear row and the angle of contact (α₂) of the balls (52) of the front row are substantially identical, substantially equal to 45°, **in that** the distance (b) between the two rows of balls (51, 52) is between 6.5% and 7.5% of the average diameter (d) of the said rows and **in that** the width (c) of the outer race (54) is substantially between 8% and 8.5% of the average diameter (d) of the rows of balls.

13. Device according to Claim 2, **characterized in that** the half-angle at the vertex (θ) of the cone forming the front portion (541) of the outer race (54) is substantially between 20° and 25°, and **in that** the distance (r) measured between the rear end of the centring element (543) of the outer race and the plane containing the centres of the balls (51) of the rear row of the bearing is substantially between 5% and 7% of the average diameter (d) of the said row, **in that** the angle of contact (α₁) of the balls (51) of the rear row and the angle of contact (α₂) of the balls (52) of the front row are substantially identical, substantially equal to 45°, **in that** the distance (b) between the two rows of balls (51, 52) is between 6% and 7% of the average diameter (d) of said rows and **in that** the width (c) of the outer race (54) lies substantially between 12% and 14% of the average diameter (d) of the rows of balls.

14. Device according to one of the preceding claims, **characterized in that** the carrying structure (1) is made of aluminium and the inner race (53) and outer race (54) of the bearing (5) are made of steel.

## Patentansprüche

1. Vorrichtung zur Drehführung einer Last bezüglich eines Tragwerks (1), **dadurch gekennzeichnet, dass** sie ein Lager (5) mit zwei Reihen von Kugeln (51, 52) aufweist, die zwischen einem inneren Ring (53), der die Last trägt, und einem äußeren Ring (54) angeordnet sind, der direkt am Tragwerk (1) befestigt ist, und dass der vordere Bereich (541) des äußeren Rings (54) eine Kegelform aufweist, die dazu neigt, bei Temperaturveränderungen den Druck zu kompensieren, der vom Tragwerk (1) auf den äußeren Ring (54) ausgeübt wird.

2. Vorrichtung nach Anspruch 1, **dadurch gekennzeichnet, dass** der äußere Ring (54) des Lagers (5) über einen Kragen (542) am Tragwerk (1) befestigt ist und auf dieses Tragwerk durch eine kurze kreisförmige Zentrierung (543) zentriert wird.

3. Vorrichtung nach einem der Ansprüche 1 und 2, **dadurch gekennzeichnet, dass** der Scheitelhalbwinkel (θ) des den vorderen Bereich (541) des äußeren Rings (54) bildenden Kegels im Wesentlichen zwischen 20° und 30° liegt.

4. Vorrichtung nach einem der vorhergehenden Ansprüche, **dadurch gekennzeichnet, dass** die Kontaktwinkel (α₁) der Kugeln (51) der hinteren Reihe und (α₂) der Kugeln (52) der vorderen Reihe größer als 35° sind.

5. Vorrichtung nach Anspruch 4, **dadurch gekennzeichnet, dass** die Kontaktwinkel im Wesentlichen gleich sind und im Wesentlichen zwischen 40° und 50° liegen.

6. Vorrichtung nach einem der Ansprüche 2 bis 5, **dadurch gekennzeichnet, dass** der zwischen dem hinteren Ende der Zentrierung (543) des äußeren Rings und der die Mitten der Kugeln (51) der hinteren Reihe des Lagers enthaltenden Ebene gemessene Abstand (r) im Wesentlichen zwischen 2% und 4% des mittleren Durchmessers (d) der Reihe liegt.

7. Vorrichtung nach Anspruch 6, **dadurch gekennzeichnet, dass** der Abstand (b) zwischen den zwei Reihen von Kugeln (51, 52) im Wesentlichen zwischen 5% und 10% des mittleren Durchmessers (d) der Reihen liegt.

8. Vorrichtung nach einem der Ansprüche 6 oder 7, **dadurch gekennzeichnet, dass** die Breite (c) des äußeren Rings im Wesentlichen zwischen 8% und 9% des mittleren Durchmessers (d) der Reihen von Kugeln liegt.

9. Vorrichtung nach einem der Ansprüche 2 bis 5, **dadurch gekennzeichnet, dass** der zwischen dem hinteren Ende der Zentrierung (543) des äußeren Rings und der die Mitten der Kugeln (51) der hinteren Reihe des Lagers enthaltende Ebene gemessene Abstand (r) im Wesentlichen zwischen 4% und 8% des mittleren Durchmessers (d) der Reihe liegt.

10. Vorrichtung nach Anspruch 9, **dadurch gekennzeichnet, dass** der Abstand (b) zwischen den zwei Reihen von Kugeln (51, 52) im Wesentlichen zwischen 5% und 10% des mittleren Durchmessers (d) der Reihen liegt.

11. Vorrichtung nach einem der Ansprüche 6 oder 7, **dadurch gekennzeichnet, dass** die Breite (c) des äußeren Rings im Wesentlichen zwischen 12% und 14% des mittleren Durchmessers (d) der Reihen von Kugeln liegt.

12. Vorrichtung nach Anspruch 2, **dadurch gekennzeichnet, dass** der Scheitelhalbwinkel (θ) des Kegels, der den vorderen Bereich (541) des hinteren Rings (54) bildet, im Wesentlichen zwischen 20° und 25° liegt, dass der zwischen dem hinteren Ende der Zentrierung (543) des äußeren Rings und der die Mitten der Kugeln (51) der hinteren Reihe des Lagers enthaltenden Ebene gemessene Abstand (r) im Wesentlichen zwischen 2,5% und 3,5% des mittleren Durchmessers (d) der Reihe liegt, dass die Kontaktwinkel (α₁) der Kugeln (51) der hinteren Reihe und (α₂) der Kugeln (52) der vorderen Reihe im Wesentlichen gleich sind, im Wesentlichen 45°, dass der Abstand (b) zwischen den zwei Reihen von Kugeln (51, 52) zwischen 6,5% und 7,5% des mittleren Durchmessers (d) der Reihen liegt, und dass die Breite (c) des äußeren Rings (54) im Wesentlichen zwischen 8% und 8,5% des mittleren Durchmessers (d) der Reihen von Kugeln liegt.

13. Vorrichtung nach Anspruch 2, **dadurch gekennzeichnet, dass** der Scheitelhalbwinkel (θ) des Kegels, der den vorderen Bereich (541) des äußeren Rings (54) bildet, im Wesentlichen zwischen 20° und 25° liegt, dass der zwischen dem hinteren Ende der Zentrierung (543) des äußeren Rings und der die Mitten der Kugeln (51) der hinteren Reihe des Lagers enthaltenden Ebene gemessene Abstand (r) im Wesentlichen zwischen 5% und 7% des mittleren Durchmessers (d) der Reihe liegt, dass die Kontaktwinkel (α₁) der Kugeln (51) der hinteren Reihe und (α₂) der Kugeln (52) der vorderen Reihe im Wesentlichen gleich sind, im Wesentlichen 45°, dass der Abstand (b) zwischen den zwei Reihen von Kugeln (51, 52) zwischen 6% und 7% des mittleren Durchmessers (d) der Reihen liegt, und dass die Breite (c) des äußeren Rings (54) im Wesentlichen zwischen 12% und 14% des mittleren Durchmessers (d) der Reihen von Kugeln liegt.

14. Vorrichtung nach einem der vorhergehenden Ansprüche, **dadurch gekennzeichnet, dass** das Tragwerk (1) aus Aluminium ist und die inneren (53) und äußeren Ringe (54) des Lagers (5) aus Stahl sind.
